# EUROPEAN PATENT SPECIFICATION

(11) **EP 3 179 401 B1**
(45) Date of publication and mention of the grant of the patent: **13.10.2021**
(21) Application number: 16198089.1
(22) Date of filing: 10.11.2016
(51) Int. Cl.: G06F 21/55, G06F 21/57, G06F 11/30, H04L 29/06, H04L 29/08

(54) **APPLICATION ASSURANCE FOR OPEN PLATFORM IN-VEHICLE INFOTAINMENT SYSTEM**
ANWENDUNGSVERSICHERUNG FÜR FAHRZEUGINTERNES INFOTAINMENTSYSTEM MIT OFFENER PLATTFORM
ASSURANCE D'APPLICATION D'UN SYSTÈME D'INFODIVERTISSEMENT À PLATE-FORME OUVERTE EMBARQUÉ DANS UN VÉHICULE

(30) Priority: 12.11.2015 US 201514939625
(43) Date of publication of application: 14.06.2017
(73) Proprietor: Toyota InfoTechnology Center U.S.A., Inc., Mountain View, CA 94043 (US); DENSO CORPORATION, Kariya-shi, Aichi-ken, 448-8661 (JP)
(72) Inventor: SHIRAISHI, Shinichi, Mountain View, CA 94043 (US); ROSU, Grigore, Champaign, IL 61822 (US); DAIAN, Philip, Great Neck, NY 11021 (US); IWAI, Akihito, San Jose, CA 95110 (US); KUWAJIMA, Hiroshi, Kariya-city, Aichi 448-8661 (JP)
(74) Representative: TBK

(56) References cited:
- US-A1- 2011 214 162
- US-A1- 2014 068 697
- US-A1- 2014 181 896

## Description

### BACKGROUND OF THE INVENTION

The specification relates to application assurance for an open platform in-vehicle infotainment system.

New vehicle purchasers expect that their vehicle will come equipped with an in-vehicle infotainment system. As a result, in-vehicle infotainment systems are increasing in popularity. Many popular in-vehicle infotainment systems rely on the Android operating system. Android is an open source operating system. An infotainment system that includes an open source operating system may be referred to as an "open platform in-vehicle infotainment system."

Document US 2014/181896 A1 discloses a method for protecting resources from unauthorized access, which comprises providing a library of handler functions, wherein the handler functions control access of one or more applications to protected resources, associating a security policy with the library of handler functions, wherein the security policy specifies access rules for accessing protected resources by the applications, modifying the one or more applications to access the library of handler functions instead of corresponding application program interface (API) functions of the computer device, receiving by a handier function an API function call from a modified application, determining whether the received API function call complies with the access rules, and when the API function call complies with the access rules, performing by the handler function the API function call from the modified application to the protected resources.

Furthermore, document US 2014/068697 A1 refers to cloud-computing, and is directed to statically checking conformance of a computer-implemented service at a source code level to requirements specified at a process level and include actions of receiving source code of the computer-implemented service, receiving one or more rules, the one or more rules being generated based on a mapping and including a set of technical requirements that can be checked on the source code level, the mapping associating the requirements with the source code, and processing the source code and the one or more rules using static code analysis (SCA) to generate a result, the result indicating whether the computer-implemented service conforms to the requirements.

Still further, document US 2011/214162 A1 refers to an apparatus and method for providing cooperative enablement of user input options in inter-device communications technology, and specifically discloses limiting the user interface for safety when the vehicle is in motion.

It is an object underlying the present invention to provide an improved application assurance for an open platform in-vehicle infotainment system.

### SUMMARY OF THE INVENTION

The above object is achieved by a system of a vehicle according to claim 1, method of providing application assurance for an open platform in-vehicle infotainment system included in a vehicle according to claim 10, and tangible memory of open platform in-vehicle infotainment system included in a vehicle according to claim 11. Further features and advantageous modifications are shown in the dependent claims.

The subject matter described in this disclosure includes a monitor module and an application assurance system. The monitor module and the application assurance system provide application assurance for an open platform in-vehicle infotainment system included in a vehicle.

Also described is an untrusted application. The untrusted application may include any application provided by a third party or a vendor who is unknown to the manufacturer of the vehicle or the manufacturer infotainment system. The third party may also include any entity not controlled by the manufacturer of the vehicle or the manufacturer of the infotainment system.

Although this disclosure discusses the functionality of the monitor module and the application assurance system in relation to open platforms such as Android (including Android's forks or derivatives), the application assurance system may provide similar functionality for other platforms, including closed platforms such as QNX, CarPlay and other forks or derivatives of these platforms. All descriptions provided below referring to Android include Android and any forks or derivatives thereof unless specifically stated otherwise. In some embodiments, the open platform may include one or more Android Native Development Kits configured to execute one or more applications as native code.

The open platform in-vehicle infotainment system includes an open source operating system such as Android. Android provides access to applications provided by third parties or vendors who are unknown to the manufacturer of the vehicle or the infotainment system ("unknown vendor" or "unknown vendors"). However, Android does not provide adequate quality or safety assurance for third party applications. The application assurance system solves this problem by providing open platform in-vehicle infotainment systems with (1) application quality assurance and (2) application safety assurance.

The quality and safety assurance of applications provided by third parties or unknown vendors is important to vehicle manufacturers. For example, vehicle manufacturers require that third parties and unknown vendors design and build their applications so that they follow predefined rules as defined by the application programming interface ("API") of the platform for the open platform in-vehicle infotainment system.

Analyzing performance of an application currently running on the infotainment system and determining whether the application follows these rules is described as "application quality assurance." Android and other open platforms for infotainment systems do not provide application quality assurance, and so, vehicle manufacturers are reluctant to use these platforms for their infotainment systems.

Different jurisdictions provide their own safety guidelines for infotainment systems and the applications that are executable by these infotainment systems. For example, the United States, European Union and Japan each provide their own safety guidelines. Compliance with these guidelines may be mandatory. Fines or legal liability may arise for failure to comply. Analyzing performance of an application currently running on the infotainment system and determining whether the application follows these guidelines is described as "application safety assurance." Android and other open platforms for infotainment systems do not provide application safety assurance, and so, this is an additional reason that vehicle manufacturers are reluctant to use these platforms for their infotainment systems.

Current solutions to the problem of providing application quality assurance and application safety assurance for open platform in-vehicle infotainment systems have been determined to be inadequate by vehicle manufacturers. Currently, the most common approach is static analysis. Static analysis is performed without actually executing the application. Static analysis generally requires access to the source code or object code of the application being analyzed. Research has shown that static analysis may have limited usefulness in identifying the presence of well-known bugs that may be present in an application. For example, static analysis may identify a buffer overflow event, division by zero, etc.

However, static analysis is frequently unable to identity bugs which are not well-known (such as wrong access from applications to the infotainment system API). Furthermore, research has shown that as applications become more complex and Internet-dependent. Applications may include features like dynamically loaded code and external programmatic instructions. Providing quality guarantees for applications including dynamically loaded code or external programmatic instructions through static analysis is impossible or impractical. Even assuming the aforementioned deficiencies with static analysis could be overcome, static analysis would still be rejected as a solution by vehicle manufacturers since static analysis requires access to the source code or object code of an application, and vehicle manufacturers frequently do not have access to this code. As a result, static analysis of applications provided by third parties or unknown parties is frequently not possible. Providing application safety assurance via static analysis is even more difficult than providing quality assurance since safety guidelines vary from jurisdiction-to-jurisdiction.

For the reasons described above, vehicle manufacturers have determined that static analysis is not an acceptable solution for providing (1) application quality assurance and (2) application safety assurance for open platform in-vehicle infotainment systems. For similar reasons, vehicle manufacturers have also rejected any proposed solution that would rely on access to source code or object code since, for example, vehicle manufacturers frequently do not have access to this code.

Another approach that has been rejected by vehicle manufacturers includes coding protections directly into the desired platform, thereby creating a customized fork that includes internal quality and safety assurances. However, research has shown that this approach does not provide significant assurance that what is being checked is exactly the desired application property. As a result, this approach has been rejected by vehicle manufacturers as not providing adequate application quality assurance or application safety assurance. For example, since research shows that a forked platform that is custom coded to include internal quality and safety assurances still would not provide the same quality and safety guarantees as those of a formally analyzed system, then using such a forked platform may subject vehicle passengers to unnecessary risk. This approach may also subject vehicle manufacturers to legal claims in the event of a vehicle accident related to use of an infotainment system or application of an infotainment system.

According to one innovative aspect of the subject matter described in this disclosure, a system, method and tangible memory for providing application assurance for an open platform in-vehicle infotainment system is described.

The system includes an open platform in-vehicle infotainment system including a tangible memory, a processor and an untrusted application including a monitor module. The untrusted application is stored in the tangible memory which is communicatively coupled to the processor. The monitor module included in the untrusted application is generated based on a set of one or more runtime rules describing desired behavior of the untrusted application that complies with a specification for an application programming interface of the open platform in-vehicle infotainment system. The untrusted application, responsive to being executed by the processor, runs on the open platform in-vehicle infotainment system. The monitor module, responsive to the untrusted application being executed and running on the open platform in-vehicle infotainment system, causes the processor to observe, based on the one or more runtime rules, behavior of the untrusted application to determine whether the observed behavior of the untrusted application is consistent with the desired behavior of the untrusted application so that the observed behavior complies with the specification for the application programming interface of the open platform in-vehicle infotainment system.

The method includes executing, by a processor of the open platform in-vehicle infotainment system, an untrusted application so that the untrusted application runs on the open platform in-vehicle infotainment system. The method includes analyzing a specification for an application programming interface of the open platform in-vehicle infotainment system to determine desired behavior of the untrusted application that complies with the specification. The method includes retrieving geographic data describing a geographic location of the vehicle. The geographic data describes a real time geographic location of the vehicle upon execution of the untrusted application. The method includes determining one or more safety guidelines based on the geographic location of the vehicle. The method includes generating the one or more runtime rules which are configured so that compliance with the one or more runtime rules corresponds to compliance with (1) the specification and (2) the one or more safety guidelines. The method includes generating a monitor module based on the one or more runtime rules. The method includes instrumenting the untrusted application so that untrusted application includes the monitor module. The method includes the monitor module, responsive to the untrusted application being executed and running on the open platform in-vehicle infotainment system, causing the processor to observe, based on the one or more runtime rules, behavior of the untrusted application. The method includes the monitor module causing the processor to determine whether the observed behavior of the untrusted application is consistent with the desired behavior of the untrusted application so that the observed behavior complies with one or more runtime rules.

Other aspects include corresponding methods, apparatus, and computer program products.

This patent application is related to U.S. Patent No. 8,719,796 entitled "Parametric Trace Slicing" and issued on May 6, 2014.

### BRIEF DESCRIPTION OF THE DRAWINGS

The disclosure is illustrated by way of example, and not by way of limitation in the figures of the accompanying drawings in which like reference numerals are used to refer to similar elements.
Figure 1 is a block diagram illustrating an example operating environment for providing application assurance for an open platform in-vehicle infotainment system.
Figure 2 is a block diagram illustrating an example system for providing application assurance for an open platform in-vehicle infotainment system.
Figure 3 is a flowchart of an example method for generating a monitor module included in an untrusted application.
Figure 4 is a flowchart of an example method for providing application assurance for an open platform in-vehicle infotainment system.
Figure 5 is a block diagram illustrating an example open platform in-vehicle infotainment system including an application assurance system and a monitor module.

### DESCRIPTION OF THE EMBODIMENTS

One or more of an application assurance system and a monitor module provide application assurance for an open platform in-vehicle infotainment system (referred to herein as an "open platform in-vehicle infotainment system" or an "infotainment system") included in a vehicle. The monitor module may be an element of an untrusted application. The untrusted application may include any application provided by a third party or a vendor who is unknown to the manufacturer of the vehicle or the manufacturer of the infotainment system. The third party may also include any entity not controlled by the manufacturer of the vehicle or the manufacturer of the infotainment system.

The application assurance system according to the invention can determine one or more runtime rules for an untrusted application based on one or more of (1) a specification of the application programming interface ("API") for the open platform in-vehicle infotainment system and (2) one or more safety guidelines corresponding to the geographic location of the vehicle. The one or more runtime rules are data that describe the desired behavior of the untrusted application when running on the open platform in-vehicle infotainment system. The one or more runtime rules is/are configured so that compliance with the one or more runtime rules corresponds to compliance with one or more of (1) the specification and (2) the one or more safety guidelines.

The application assurance system may generate the monitor module based on the one or more runtime rules. The application assurance system may instrument the untrusted application so that untrusted application includes the monitor module. The monitor module may observe the behavior of the untrusted application to determine whether the observed behavior of the untrusted application is consistent with the desired behavior of the untrusted application so that the observed behavior complies with the one or more runtime rules. In some embodiments, the application assurance system includes one or more monitor modules. For example, the application assurance system may include multiple groups of runtime rules (where groups may be based on different monitored attributes) and one or more monitor modules for each group of runtime rules. In some embodiments, one monitor module may monitor another monitor module. In some embodiments, one monitor module may communicate with other monitor modules.

The application assurance system, untrusted application and monitor module may be an element of the open platform in-vehicle infotainment system. One or more elements of the application assurance system, untrusted application and monitor module may be stored on a tangible memory of the vehicle. A processor may be communicatively coupled to the tangible memory and configured to execute one or more of the assurance system, untrusted application and monitor module. The processor may be an element of the open platform in-vehicle infotainment system or an onboard computer of the vehicle.

### Example System Overview

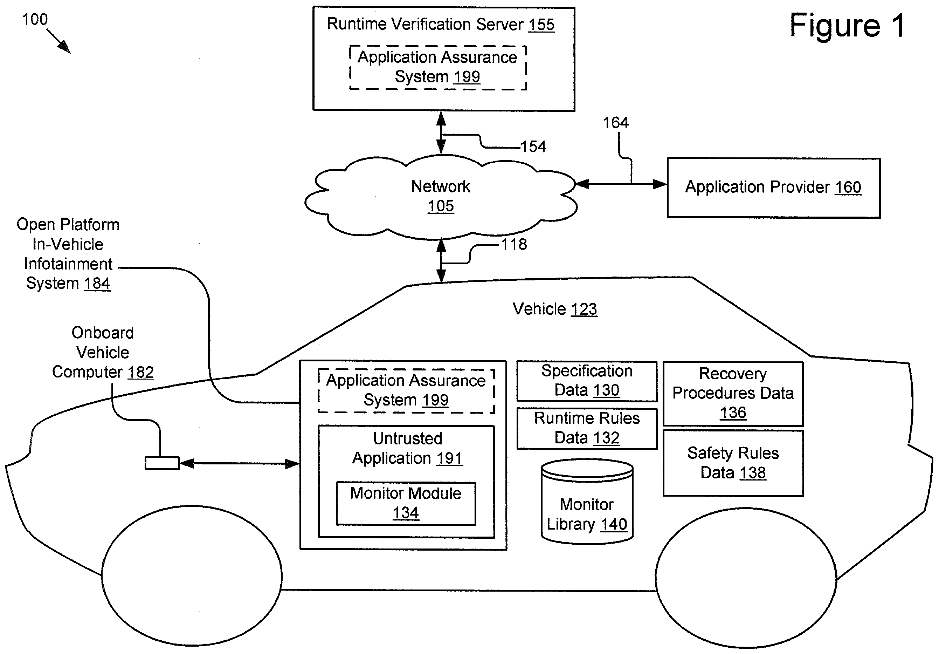

Figure 1 illustrates a block diagram of one embodiment of environment 100 for providing application assurance for an open platform in-vehicle infotainment system 184 included in a vehicle 123. The environment 100 includes the vehicle 123, a runtime verification server 155 and an application provider 160. In the illustrated embodiment, these entities of the environment 100 are communicatively coupled via a network 105.

The vehicle 123 can be used by way of example. While Figure 1 illustrates one vehicle 123, the disclosure applies to a system architecture having one or more vehicles 123. Furthermore, although Figure 1 illustrates one network 105 coupled to the vehicle 123, the runtime verification server 155 and the application provider 160, in practice one or more networks 105 can be connected to these entities. While Figure 1 includes one runtime verification server 155 and one application provider 160, the environment 100 could include one or more runtime verification servers 155 and one or more application providers 160. In some embodiments, Figure 1 may include one or more monitor modules 134.

The network 105 can be a conventional type, wired or wireless, and may have numerous different configurations including a star configuration, token ring configuration, or other configurations. Furthermore, the network 105 may include a local area network (LAN), a wide area network (WAN) (e.g., the Internet), or other interconnected data paths across which multiple devices may communicate. In some embodiments, the network 105 may be a peer-to-peer network. The network 105 may also be coupled to or include portions of a telecommunications network for sending data in a variety of different communication protocols. In some embodiments, the network 105 includes Bluetooth® communication networks or a cellular communications network for sending and receiving data via short messaging service (SMS), multimedia messaging service (MMS), hypertext transfer protocol (HTTP), direct data connection, WAP, e-mail, etc. In some embodiments, the network 105 may include a GPS satellite for providing GPS navigation to the vehicle 123. The network 105 may be a mobile data network such as 3G, 4G, LTE, Voice-over-LTE ("VoLTE"), or any other mobile data network or combination of mobile data networks.

The application provider 160 can be a hardware server that includes a processor, a memory and network communication capabilities. The application provider 160 may include software and hardware for providing applications to one or more of the entities of the environment 100. For example, the application provider 160 may be an application developer. The application provider 160 may be the developer or vendor of an untrusted application 191. The untrusted application 191 may include any application provided by a third party or a vendor who is unknown to, or not controlled by, the manufacturer of the vehicle 123 or the manufacturer open platform in-vehicle infotainment system 184.

In some embodiments, the application provider 160 may include software and hardware for providing an application store service accessible by an open platform in-vehicle infotainment system 184. For example, the application provider 160 may provide an application store service such as Google Play™, Amazon Appstore™, GetJar, Slide ME, F-Droid, Samsung Galaxy Apps™, AppsLib, Mobogenie, Apple App Store™, etc. The untrusted application 191 may be downloaded from the application store service provided by the application provider 160. For example, the open platform in-vehicle infotainment system 184 may download the untrusted application 191 from the application provider 160 via the network 105.

In the illustrated embodiment, the application provider 160 is coupled to the network 105 via a signal line 164. The application provider 160 sends and receives data to and from other entities of the environment 100 via the network 105. For example, the application provider 160 receives a request to download the untrusted application 191 from the vehicle 123. The application provider 160 transmits data describing the code and routines for the untrusted application 191 to the vehicle 123 over the network 105. In some embodiments, the application assurance system 199 is an element of the runtime verification server 155 and the application provider 160 may provide the untrusted application 191 to the runtime verification server 155. The runtime verification server 155 may provide the untrusted application 191 to the vehicle 123 after modifying the untrusted application 191 to include the monitor module 134 as described below.

The runtime verification server 155 is a hardware server that includes a processor, a memory and network communication capabilities. In the illustrated example, the runtime verification server 155 is coupled to the network 105 via signal line 154.

The runtime verification server 155 may include an application assurance system 199. The application assurance system 199 is depicted using a dashed line in Figure 1 since the application assurance system may be an element of the vehicle 123. In some embodiments, some elements of the application assurance system 199 may reside on the runtime verification server 155 and some elements of the application assurance system 199 may reside on the vehicle 123. In some embodiments, a first application assurance system 199 may reside on the runtime verification server 155 while a second application assurance system 199 may reside on the vehicle 123. In some embodiments, the runtime verification server 155 includes a first application assurance system 199, the vehicle 123 includes a second application assurance system 199 and some of the functionality of the application assurance system 199 is provided by the runtime verification server 155 while some of the functionality of the application assurance system 199 is provided by the vehicle 123.

In some embodiments, the runtime verification server 155 may include one or more of the following elements: specification data 130; runtime rules data 132; a monitor module 134; recovery procedures data 136; safety rules data 138; and a monitor library 140. The elements may be stored on a tangible memory of the runtime verification server 155. The tangible memory may be configured to be accessible by a processor of the runtime verification server 155.

The runtime verification server 155 may send and receive data to and from other entities of the environment 100 via the network 105. For example, the runtime verification server 155 may transmit the one or more of the following elements to the vehicle 123 via the network 105: the application assurance system 199; the specification data 130; the runtime rules data 132; the monitor module 134; the recovery procedures data 136; the safety rules data 138; and the monitor library 140. The runtime verification server 155 may transmit the elements to the vehicle 123 over the network 105.

In some embodiments, one or more of the following elements may be included in the vehicle 123 and not the runtime verification server 155: the application assurance system 199; the specification data 130; the runtime rules data 132; the monitor module 134; the recovery procedures data 136; the safety rules data 138; and the monitor library 140. These elements will be described below with reference to the vehicle 123.

The vehicle 123 may include an automobile, a bus, an airplane, a boat, or other vehicular conveyance. The vehicle 123 may be an electric, hybrid or include an internal combustion engine. In some embodiments, the vehicle 123 may include an autonomous vehicle or a semi-autonomous vehicle 123. In some embodiments, the vehicle 123 may include a semi-autonomous vehicle 123 in which the vehicle 123 controls at least part of the steering functionality of the vehicle 123. In the illustrated example, the vehicle 123 is communicatively coupled to the network 105 via signal line 118.

The vehicle 123 may include one or more of the following elements: an onboard vehicle computer 182; an open platform in-vehicle infotainment system 184; an application assurance system 199; specification data 130; runtime rules data 132; a monitor module 134; recovery procedures data 136; safety rules data 138; and a monitor library 140.

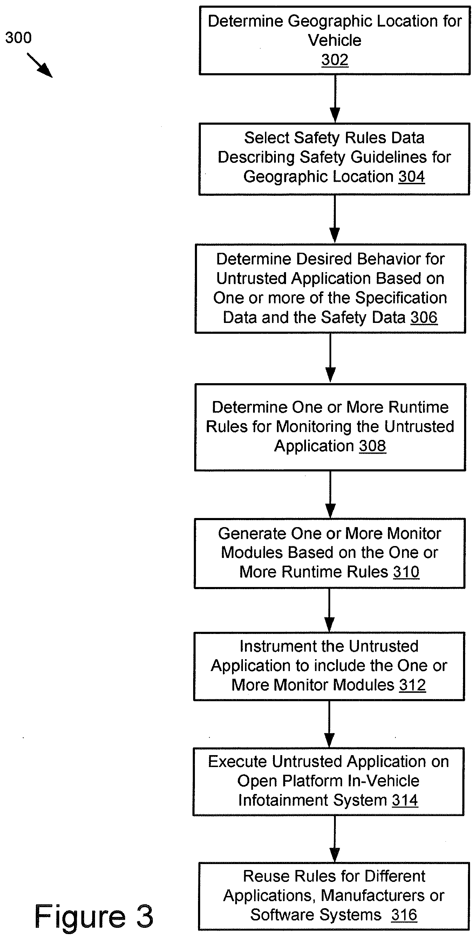

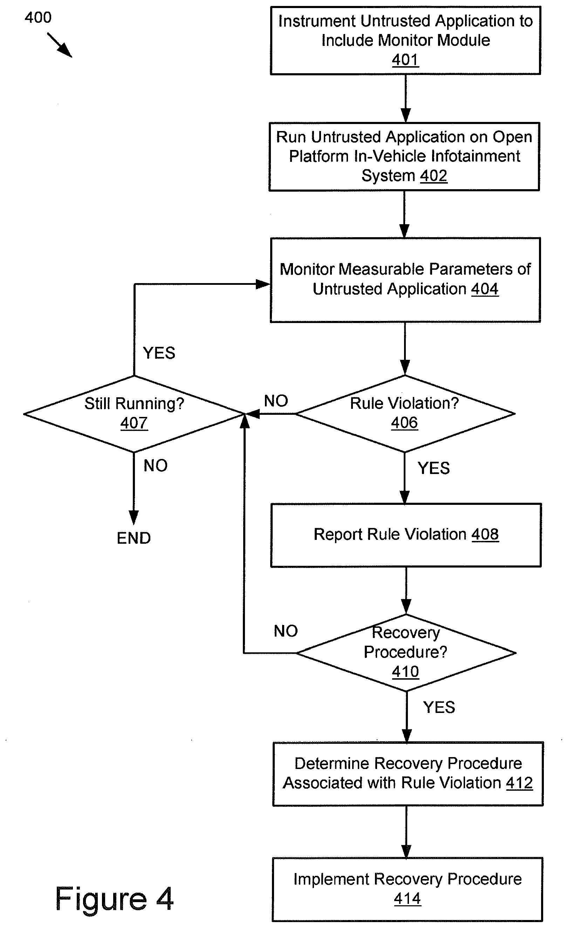

The onboard vehicle computer 182 may include a memory and a processor. The onboard vehicle computer 182 may include a special-purpose computing device. The onboard vehicle computer 182 may be communicatively coupled to an open platform in-vehicle infotainment system 184. The onboard vehicle computer 182 may execute one or more blocks of the methods 300, 400 described below with reference to Figures 3 and 4. The onboard vehicle computer 182 may control performance of one or more of the following elements: the application assurance system 199, the untrusted application 191; and the monitor module 134.

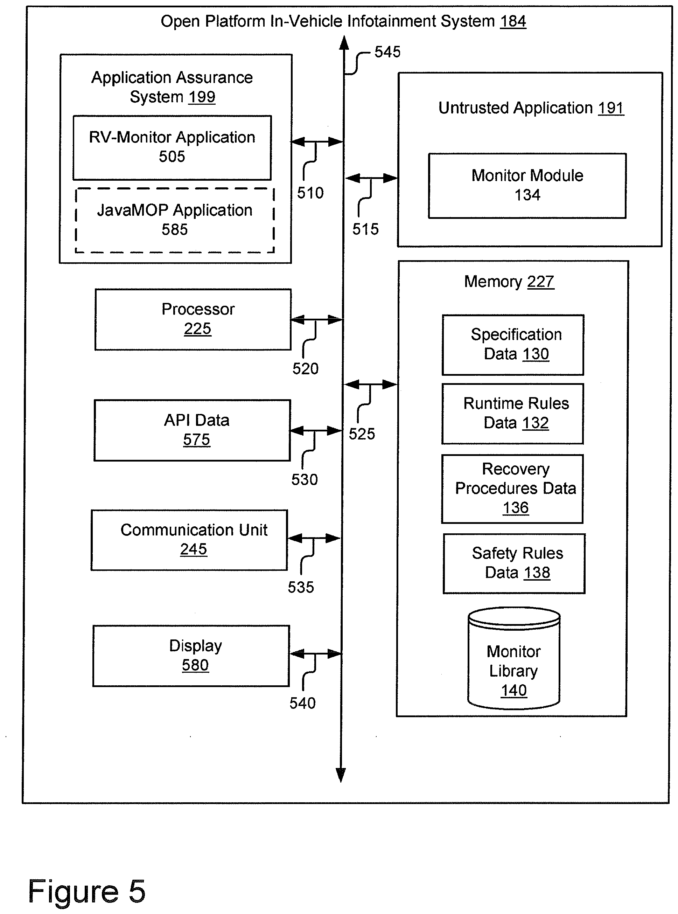

The open platform in-vehicle infotainment system 184 may include an open source operating system such as Android (or any fork or derivative operating system of Android, or one or more Android Native Development Kits configured to implement or execute one or more applications). The open platform in-vehicle infotainment system 184 may include a memory and a processor. The open platform in-vehicle infotainment system 184 may communicate with the network 105 and provide infotainment content to the vehicle 123. A user of the vehicle 123 may consume the infotainment content. An example of the open platform in-vehicle infotainment system 184 is depicted in Figure 5.

The open platform in-vehicle infotainment system 184 may include an application assurance system 199 and an untrusted application 191. The untrusted application 191 may include a monitor module 134. The monitor module 134 may be generated by the application assurance system 199. The monitor module 134 may be instrumented in the untrusted application 191 by the application assurance system 199. The monitor module 134 is described in more detail below.

In some embodiments, one or more of the onboard vehicle computer 182 or the open platform in-vehicle infotainment system 184 may include one or more of the following elements: the specification data 130; the runtime rules data 132; the recovery procedures data 136; the safety rules data 138; and the monitor library 140.

The application assurance system 199 may include code and routines configured to perform one or more of the blocks of the methods 300, 400 described below with reference to Figures 3 and 4. In some embodiments, the application assurance system 199 includes the RV-Monitor application (or any runtime verification and monitoring application derived therefrom) produced and distributed by Runtime Verification Inc. of Urbana, Illinois. An example of the RV-Monitor application is depicted in Figure 5 (element 505). Embodiments of the RV-Monitor application are also described in U.S. Patent No. 8,719,796 entitled "Parametric Trace Slicing" and issued on May 6, 2014.

In embodiments where the application assurance system 199 includes the RV-Monitor application, the RV-Monitor application may include code and routines configured to analyze the specification of the API for the open platform in-vehicle infotainment system 184 to determine one or more runtime rules. The specification may be described by the specification data 130.

The untrusted application 191 may be executed by a processor of the open platform in-vehicle infotainment system 184 (or onboard vehicle computer 182). Execution of the untrusted application 191 may result in one or more measurable parameters corresponding to the observable behavior of the untrusted application 191. The measurable parameters may include, for example, processes being called, portions of the API of the open platform in-vehicle infotainment system 184 being accessed, data being written to a memory of the open platform in-vehicle infotainment system 184 and runtime errors such as buffer overflow events, compiler errors, etc.

The RV-Monitor application may include code and routines configured to generate and configure the monitor module 134 so that the monitor module 134 measures the measurable parameters resulting from execution of the untrusted application 191. In this way, the monitor module 134 may observe the behavior of the untrusted application 191.

The one or more runtime rules may describe the desired behavior of the untrusted application 191 after being executed by a processor of the vehicle 123. For example, the one or more runtime rules may describe one or more desired parameters for the untrusted application 191. The RV-Monitor application may include code and routines to determine and configure the one or more runtime rules so that compliance with the one or more runtime rules corresponds to compliance with the specification of the API for the open platform in-vehicle infotainment system 184. The one or more runtime rules may be described by the runtime rules data 132.

In some embodiments, the application assurance system 199 generates code and routines describing the monitor module 134 from one or more runtime rules. The generation of the code and routines describing the monitor module 134 may be independent of one or more of the following: source code for the untrusted application 191; and object code for the untrusted application 191. The application assurance system 199 may generate the code and routines describing the monitor module 134 responsive to execution of the untrusted application 191 by the processor 225.

Different jurisdictions provide their own safety guidelines for infotainment systems and the applications that are executable by these infotainment systems. These safety guidelines may be described by the safety rules data 138. In some embodiments, the RV-Monitor application may include code and routines to determine and configure the one or more runtime rules so that compliance with the one or more runtime rules corresponds to (1) compliance with the specification of the API for the open platform in-vehicle infotainment system 184 and (2) compliance with the one or more safety guidelines described by the safety rules data 138. The one or more runtime rules determined by the RV-Monitor application may be configured so that compliance with the one or more runtime rules corresponds to compliance with the one or more safety guidelines for the geographic location where the vehicle 123 is presently located. For example, the vehicle 123 may include a GPS system that determines the geographic location of the vehicle 123 and the application assurance system 199 may include code and routines configured to determine the one or more safety guidelines that apply for the geographic location where the vehicle 123 is presently located. The RV-Monitor application may determine the one or more runtime rules based on the one or more safety guidelines selected based on the geographic location of the vehicle 123.

The RV-Monitor application may generate one or more monitor modules 134 based on the runtime rules data 132. The monitor module 134 may include code and routines configured to perform one or more of the blocks of the methods 300, 400 described below with reference to Figures 3 and 4. The monitor library 140 may include one or more monitor modules 134 associated with one or more different untrusted applications 191.

The RV-Monitor application includes code and routines configured to instrument the untrusted application 191 to include the monitor module 134. Optionally, the application assurance system 199 may include a JavaMOP application which, responsive to being executed by a processor, instruments the untrusted application 191 so that the untrusted application 191 includes the monitor module 134. An example of the JavaMOP application is described in more detail below with reference to Figure 5 (element 585).

Upon execution of the untrusted application 191, the monitor module 134 observes the behavior of the untrusted application and compares the observed behavior to the desired behavior described by the runtime rules data 132. For example, the monitor module 134 traces the observed parameters of the untrusted application 191 upon execution. The monitor module 134 collects feedback data describing whether the observed behavior of the untrusted application is consistent with the desired behavior of the untrusted application. The monitor module 134 builds a trace log. For example, the feedback data may include a trace log describing one or more parameters of the untrusted application 191 which were measured by the monitor module 134 upon execution of the untrusted application 191. The monitor module 134 may identify instances where the observed behavior of the untrusted application 191 is inconsistent with the desired behavior of the untrusted application 191.

In some embodiments, the open platform in-vehicle infotainment system 184 transmits data describing the execution of the untrusted application 191 and its undesirable behavior to the runtime verification server 155. The runtime verification server 155 analyzes the behavior of the untrusted application 191 and determines how to modify the code of the untrusted application 191 so that the behavior of the untrusted application 191 upon execution is not undesirable. The runtime verification server 155 transmits recovery procedures data 136 to the application assurance system 199 describing how to modify the code of the untrusted application 191 so that it may be executed without resulting in undesirable behavior. In some embodiments, the runtime verification server 155 may transmit data to other vehicles 123 included in a fleet of vehicles 123 describing the untrusted application 191 which results in undesirable behavior, how to identify this untrusted application and (optionally) recovery procedures data 136 describing how to modify the code of this untrusted application 191 so that it may be executed without resulting in undesirable behavior. In this way, the runtime verification server 155 may assist in correcting the behavior of an untrusted application 191 included in a single vehicle 123 or a fleet including two or more vehicles 123.

The monitor module 134 or the application assurance system 199 implements one or more recovery procedures responsive to identifying an instance where the observed behavior of the untrusted application 191 is inconsistent with the desired behavior of the untrusted application 191. For example, the monitor module 134 or the application assurance system 199 causes the open platform in-vehicle infotainment system 184 to terminate execution of the untrusted application 191 so that it is no longer running or being executed. The recovery procedures may also include displaying a warning message describing the undesired behavior on a display on the open platform in-vehicle infotainment system 184. The recovery procedures may also include searching the network 105 for a solution to the problem (or retrieving a solution to the undesired behavior from a local memory of the vehicle 123) and causing the open platform in-vehicle infotainment system to execute steps to implement the solution to the problem. For example, a resource such as a library or searchable database of solutions to undesired behaviors may be searched or queried using a description of the undesired behavior as a search term. The library or searchable database may be locally stored on the vehicle 123 or accessible via the network 105. The one or more recovery procedures may be described by the recovery procedures data 136.

The monitor module 134 or the monitor module 134 or the application assurance system 199 includes code and routines configured to implement various recovery procedures described by the recovery procedure data 136. In some embodiments, the monitor module 134 or the application assurance system 199 includes code and routines configured to implement one or more of the following recovery procedures described by the recovery procedures data 136: (1) using one or more runtime hooks in a virtual machine of the open platform in-vehicle infotainment system 184 to prevent malicious code included in the untrusted application 191 from executing; (2) using one or more runtime hooks in the virtual machine of the open platform in-vehicle infotainment system 184 to modify the execution of the malicious code included in the untrusted application 191 so that the execution is determined to be safe by the application assurance system 199; (3) identifying and disabling the execution of one or more specific software components or permissions included in the malicious code of the untrusted application 191 which are determined to be undesirable; (4) determining the presence of a security issue related to data access and provide random false data to the untrusted application 191 so that the security issue is reduced, minimized or eliminated; (5) pausing execution of the untrusted application 191, causing the open platform in-vehicle infotainment system 184 to display violation details to the user of the vehicle 123 and ask the user whether they want to continue or abort execution of the untrusted application; (6) disabling the open platform in-vehicle infotainment system 184 (or communication functionality of that the system 184); (7) modifying a security policy of the open platform in-vehicle infotainment system 184 (for example the SELinux policy, firewall policy, IDS/IPS policy, etc.) to restrict the untrusted application 191 from performing a certain action and/or detect further similar attempts of undesirable behavior; and (8) allowing the user of the vehicle 123 to select from one or more of the aforementioned recovery procedures and other policies at first-time startup of the open platform in-vehicle infotainment system 184 occurring after purchase of the vehicle 123.

As described above, in some embodiments the recovery procedure may include using one or more runtime hooks in a virtual machine of the open platform in-vehicle infotainment system 184 to prevent malicious code included in the untrusted application 191 from executing. The one or more runtime hooks may exist at the system level (for example in a Linux kernel of the open platform in-vehicle infotainment system 184 if the open platform in-vehicle infotainment system 184 is running Android) as well as the virtual machine running the untrusted application 191. For example, a file open operation can either be blocked at the API level by the virtual machine or at the lower system call level by the kernel (the virtual machine itself may leverage system calls to complete the operation).

As described above, in some embodiments the recovery procedure may include disabling the open platform in-vehicle infotainment system 184 (or communication functionality of that the system 184). For example, a malicious bus access may be detected. The recovery procedure may include entirely disconnecting the bus/communication channel from the open platform in-vehicle infotainment system 184, thereby losing some functionality dependent on the bus. In another example, a network-based privacy violation or attempt to download known malicious software could result in the application assurance system 199 implementing a recovery procedure that includes disabling the networking functionality of the open platform in-vehicle infotainment system 184. In yet another example, a malicious system call attempt could result in the application assurance system 199 implementing a recovery procedure that disables or disallows the identified malicious system call for non-core applications system wide for the vehicle 123.

In some embodiments, the problem may include the portion of the code of the untrusted application 191 which caused the observed behavior of the untrusted application 191 to be inconsistent with the desired behavior of the untrusted application 191. The solution to the problem may include a patch or some other solution to the problem.

In some embodiments, the application assurance system 199 may include an electronic device configured to perform one or more steps of the methods 300, 400 described below with reference to Figures 3 and 4.

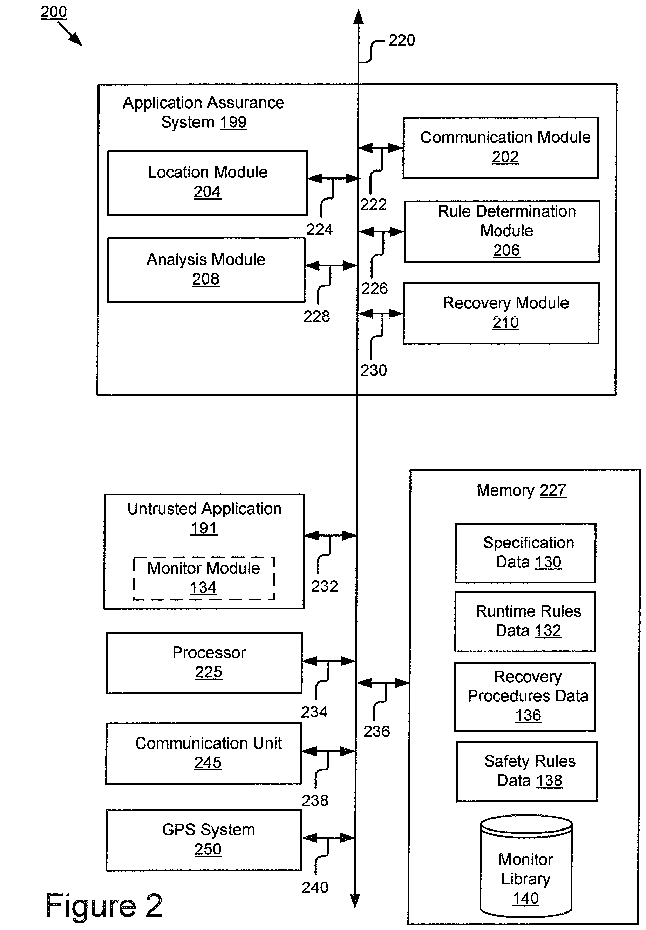

In some embodiments, the application assurance system 199 can be implemented using hardware including a field-programmable gate array ("FPGA") or an application-specific integrated circuit ("ASIC"). In some other embodiments, the application assurance system 199 can be implemented using a combination of hardware and software. The application assurance system 199 may be stored in a combination of the devices and servers, or in one of the devices or servers. The application assurance system 199 may include code and routines configured to perform one or more steps of the methods 300, 400 described below with reference to Figures 3 and 4 when executed by a processor, such as processor 225, described below with reference to Figure 2.

The application assurance system 199 and the monitor module 134 will be described in more detail below with reference to Figure 2.

### Example Electronic Devices

Figure 2 is a block diagram illustrating an example system 200 for providing application assurance for an open platform in-vehicle infotainment system 184. In some embodiments, the system 200 may include an electronic device programmed or configured to perform one or more blocks of the methods 300, 400 described below with reference to Figures 3 and 4. The system 200 may be an element of one or more of the vehicle 123 or the runtime verification server 155. In some embodiments, the system 200 may include a special-purpose computing device configured to provide some or all of the functionality described above with reference to the application assurance system 199 or below with reference to methods 300,400 described below with reference to Figures 3 and 4. The system 200 may include the open platform in-vehicle infotainment system 184.

The system 200 includes the application assurance system 199, the untrusted application 191, a processor 225, a memory 227, a communication unit 245 and a GPS system 250. The components of the system 200 are communicatively coupled by a bus 220. In some embodiments, the components of the system 200 are local to the same hardware so that the bus 220 is not necessary for communication among the components of the system 200. In some embodiments, communication structures or methods other than the bus 220 may be implemented. The untrusted application 191 includes a monitor module 134. The memory 227 may include one or more of the following elements: the specification data 130; the runtime rules data 132; the recovery procedures data 136; the safety rules data 138; and the monitor library 140.

The application assurance system 199, untrusted application 191, monitor module 134, specification data 130, runtime rules data 132, recovery procedures data 136, safety rules data 138 and monitor library 140 were described above with reference to Figure 1, and so, these descriptions will not be repeated here.

The untrusted application 191 is communicatively coupled to the bus 220 via signal line 232. The processor 225 is communicatively coupled to the bus 220 via signal line 234. The memory 227 is communicatively coupled to the bus 220 via the signal line 236. The communication unit 245 is communicatively coupled to the bus 220 via signal line 238. The GPS system 250 is communicatively coupled to the bus 220 via signal line 240. In some embodiments, one or more of the elements of the system 200 may share a signal line for communication with the bus 220.

The processor 225 includes an arithmetic logic unit, a microprocessor, a general-purpose controller, or some other processor array to perform computations and provide electronic display signals to a display device. The processor 225 processes data signals and may include various computing architectures including a complex instruction set computer (CISC) architecture, a reduced instruction set computer (RISC) architecture, or an architecture implementing a combination of instruction sets. Although Figure 2 includes a single processor 225, multiple processors 225 may be included. The processor 225 may include a graphical processing unit. Other processors, operating systems, sensors, displays, and physical configurations may be possible.

The memory 227 is a tangible storage medium that stores instructions or data that may be accessed and executed by the processor 225. The instructions or data may include code for performing the techniques described herein. The memory 227 may include a dynamic random access memory (DRAM) device, a static random access memory (SRAM) device, flash memory, or some other memory device. In some embodiments, the memory 227 also includes a non-volatile memory or similar permanent storage device and media including a hard disk drive, a floppy disk drive, a CD-ROM device, a DVD-ROM device, a DVD-RAM device, a DVD-RW device, a flash memory device, or some other mass storage device for storing information on a more permanent basis.

The communication unit 245 may include hardware that transmits and receives data to and from the network 105. In some embodiments, the communication unit 245 includes a port for direct physical connection to the network 105 or to another communication channel. For example, the communication unit 245 includes a USB, SD, CAT-5, or similar port for wired communication with the network 105. In some embodiments, the communication unit 245 includes a wireless transceiver for exchanging data with the network 105 or other communication channels using one or more wireless communication methods, including IEEE 802.11, IEEE 802.16, Bluetooth®, or another suitable wireless communication method.

In some embodiments, the communication unit 245 includes a cellular communications transceiver for sending and receiving data over a cellular communications network including via short messaging service (SMS), multimedia messaging service (MMS), hypertext transfer protocol (HTTP), direct data connection, WAP, e-mail, or another suitable type of electronic communication. In some embodiments, the communication unit 245 includes a wired port and a wireless transceiver. The communication unit 245 also provides other conventional connections to the network 105 for distribution of files or media objects using standard network protocols including TCP/IP, HTTP, HTTPS, and SMTP, etc.

The GPS system 250 includes hardware and software for providing location data describing the geographic location of the vehicle 123 to the system 200. The location data may be retrieved via the network 105. The location data may be stored in the memory 227 or provided to the location module 204. The GPS system 250 may include hardware configured to provide satellite navigation. The GPS system 250 may be an element of the communication unit 245. The GPS system 250 may be an element of the open platform in-vehicle infotainment system 184.

The location data may describe one or more of the following: the geographic location of the vehicle 123; the time associated with the determination of the geographic location; and weather data describing the weather conditions present at the geographic location for the current time. The geographic location may be described by Cartesian coordinates based on an origin present at the center of the earth. The geographic location may be the output of one or more global navigation satellite system (GNSS) positioning calculations.

In some embodiments, the application assurance system 199 includes one or more of the following: a communication module 202; a location module 204; a rule determination module 206; an analysis module 208; and a recovery module 210.

The communication module 202 is communicatively coupled to the bus 220 via signal line 222. The location module 204 is communicatively coupled to the bus 220 via signal line 224. The rule determination module 206 is communicatively coupled to the bus 220 via signal line 226. The analysis module 208 is communicatively coupled to the bus 220 via signal line 228. The recovery module 210 is communicatively coupled to the bus 220 via signal line 230.

The communication module 202 includes code and routines configured to handle communications between the application assurance system 199 and other components of the system 200. In some embodiments, the communication module 202 can include a set of instructions executable by the processor 225 to provide the functionality described below for handling communications between the application assurance system 199 and other components of the system 200. In some embodiments, the communication module 202 can be stored in the memory 227 of the system 200 and can be accessible and executable by the processor 225.

The communication module 202 sends and receives data, via the communication unit 245, to and from the network 105. For example, the communication module 202 receives, via the communication unit 245, location data from the network 105.

In some embodiments, the communication module 202 receives data from components of the system 200 and stores the data in the memory 227.

The location module 204 includes code and routines configured to determine the geographic location of the vehicle 123. The location module 204 may determine the geographic location of the vehicle 123 based on location data provided by the GPS system 250. In some embodiments, the location module 204 can be stored in the memory 227 of the system 200 and can be accessible and executable by the processor 225.

The rule determination module 206 includes code and routines configured to determine one or more runtime rules for monitoring the operation of the untrusted application 191. The rule determination module 206 selects safety rules data 138 describing one or more safety guidelines based on the geographic location determined by the location module 204. The rule determination module 206 determines the desired behavior of the untrusted application 191 based on one or more of the specification data 130 and the selected safety rules data 138. In this way, the rule determination module 206 may determine the desired behavior based on one or more of the specification of the API for the open platform in-vehicle infotainment system 184 and the safety guidelines for the current geographic location of the vehicle 123. The one or more runtime rules is/are described by the runtime rules data 132.

The rule determination module 206 includes code and routines configured to generate one or more monitor modules 134 based on the one or more runtime rules. The rule determination module 206 may include code and routines configured to build a monitor library 140 based on the one or more runtime rules.

The monitor library 140 includes different monitor modules 134 for different untrusted applications 191. For example, the system 200 may include two or more different untrusted applications 191 and each of the different untrusted applications 191 may include different monitor modules 134. The monitor library 140 may include the different monitor modules 134. The monitor library 140 may include identifying data describing different monitor modules 134 and the different untrusted applications 191 they are configured to monitor or observe. In this way, the different monitor modules 134 may be identified and instrumented in their corresponding untrusted application 191.

In some embodiments, the monitor library 140 or the runtime rules data 132 may be commercial products which may be sold to other vehicle manufacturers or other infotainment system manufacturers. For example, the runtime verification server 155 may include code and routines configured to provide the monitor library 140 or the runtime rules data 132 to other vehicle manufacturers or other infotainment system manufacturers in exchange for compensation.

The rule determination module 206 includes code and routines configured to instrument the untrusted application 191 to include the one or more monitor modules 134. In this way, the monitor module 134 may be included in the code and routines for the untrusted application 191 so that the monitor module 134 may monitor the performance or operation of the untrusted application 191 when executing on the open platform in-vehicle infotainment system 184.

The untrusted application 191 is executed by the processor 225. For example, the untrusted application 191 is executed on open platform in-vehicle infotainment system 184. Execution of the untrusted application 191 may result in one or more measurable parameters corresponding to the observable behavior of the untrusted application 191. The measurable parameters may include, for example, processes being called, portions of the API of the open platform in-vehicle infotainment system 184 being accessed, data being written to a memory of the open platform in-vehicle infotainment system 184 and runtime errors such as buffer overflow events, compiler errors, etc.

The monitor module 134 includes code and routines configured to observe and record the measurable parameters. Optionally, the monitor module 134 includes code and routines configured to identify one or more violations of the one or more runtime rules. A violation of the one or more runtime rules may correspond to a runtime error or some other undesired behavior for the untrusted application such as a wrong process being called or a wrong access to the API of the open platform in-vehicle infotainment system 184.

The monitor module 134 includes code and routines configured to generate feedback data or a trace log describing one or more parameters of the untrusted application 191. For example, the trace log describing the observed behavior of the untrusted application 191. The observed behavior of the untrusted application 191 may be indicated by the feedback data describing the measurable parameters observed and recorded by the monitor module 134. The feedback data or the trace log may also include a description of one or more runtime rule violations.

The monitor module 134 includes code and routines configured to transmit the trace log to the application assurance system 199. The monitor module 134 may periodically transmit updates for the trace log to the application assurance system 199.

The analysis module 208 includes code and routines configured to determine whether the observed behavior of the untrusted application 191 is inconsistent with the desired behavior of the untrusted application 191. In this way, the analysis module 208 may monitor one or more measurable parameters of the untrusted application 191. The analysis module 208 also includes code and routines configured to identify one or more violations of the one or more runtime rules. For example, the analysis module 208 may determine, based on the feedback data (or the trace log) and the one or more measurable parameters of the untrusted application 191, that the observed behavior of the untrusted application 191 is inconsistent with the desired behavior of the untrusted application 191.

In some embodiments, responsive to identifying a violation of one or more of the runtime rules, the analysis module 208 may provide data to the recovery module 210 describing the violation so that the recovery module 210 may determine and implement a recovery procedure configured to correct or reduce the negative effects of the violation.

In some embodiments, the analysis module 208 is an element of the monitor module 134 so that the monitor module 134 provides the functionality described above for the analysis module 208.

The recovery module 210 includes code and routines configured to determine one or more recovery procedures associated with the rule violation identified by the analysis module 208. The recovery module 210 also includes code and routines configured to implement the determined recovery procedure. For example, the recovery procedure may include providing a warning message to the driver of the vehicle 123 via a graphical display of the open platform in-vehicle infotainment system 184. The warning message may describe the rule violation or a recommended action for the driver to take responsive to the rule violation. In one embodiment, the recovery procedure may include causing the processor 225 to stop executing the untrusted application 191 and the recovery module 210 may include code and routines configured to control the processor 225 and cause the processor 225 to terminate execution of the untrusted application 191.

### Example Methods

Figures 3 is a flowchart of an example method 300 for generating a monitor 134 module included in an untrusted application 191. The untrusted application 191 is an element of an open platform in-vehicle infotainment system 184. In some embodiments, one or more blocks of the method 300 may be performed by the system 200 described above with reference to Figure 2.

At block 302 a geographic location of a vehicle 123 is determined.

At block 304 the safety rules data 138 are selected. The safety rules data 138 is selected based on the geographic location of the vehicle 123. The selected safety rules data 138 describes one or more safety guidelines for the geographic location. For example, the safety rules data 138 may be indexed based on different geographic locations. The safety rules data 138 may include different safety guidelines for different geographic locations. Block 304 may include selecting a portion of the safety data 138 to identify the one or more safety guidelines corresponding to the geographic location of the vehicle 123.

At block 306 the desired behavior for an untrusted application 191 is determined. The desired behavior is determined based on one or more of the following: specification data 130 describing a specification of the API for the open platform in-vehicle infotainment system 191; and the selected safety rules data 138 describing one or more safety guidelines corresponding to the geographic location of the vehicle 123.

At block 308 one or more runtime rules is/are determined. The one or more runtime rules is/are described by the runtime rules data 132. The one or more runtime rules is/are configured to monitor the behavior of the untrusted application 191 upon execution. The one or more runtime rules may be configured so that compliance with the one or more runtime rules corresponds to compliance with one or more of the following: the specification of the API for the open platform in-vehicle infotainment system 184; and one or more safety guidelines corresponding to the geographic location of the vehicle 123.

At block 310 one or more monitor modules 134 is/are generated. The one or more monitor modules 134 is/are generated based on the one or more runtime rules.

At block 312, the untrusted application 191 is instrumented to include the one or more monitor modules 134. For example, the code and routines of the untrusted application 191 is instrumented to include the code and routines of the one or more monitor modules 134. The instrumentation may be configured so that the one or more monitor modules 134 may observe and record the measurable parameters resulting from execution of the untrusted application 191.

In some embodiments, the code and routines of the monitor module 134 may be configured so that instrumenting the untrusted application 191 to include the one or more monitor module 134 does not modify the performance of the untrusted application 191 upon execution. For example, the measurable parameters resulting from executing the untrusted application 191 are unchanged regardless of whether the untrusted application 191 includes the one or more monitor modules 134 or not. In this way, the feedback data gathered by the monitor module 134 observing the execution of the untrusted application 191 reflects the behavior of the untrusted application 191 and not the monitor module 134 itself.

At block 314 the untrusted application 191 is executed on the open platform in-vehicle infotainment system 184. For example, a processor 225 executes the untrusted application 191 on the open platform in-vehicle infotainment system 184. The one or more monitor modules 134 included in the untrusted application 191 observes and records the measurable parameters resulting from execution of the untrusted application 191. The one or more monitor modules 134 create(s) a trace log describing the measurable parameters observed after execution of the untrusted application 191 on the open platform in-vehicle infotainment system 184. The trace log may include feedback data describing the measurable parameters resulting from execution of the untrusted application 191.

At block 316, the one or more runtime rules determined at block 308 may be reused for different untrusted applications 191, manufacturers or software systems. For example, the runtime rules data 132 describing the one or more runtime rules may be a commercial product which may be sold or licensed to other vehicle manufacturers or other infotainment system manufacturers.

Turning now to Figure 4. Figure 4 is a flowchart of an example method 400 for providing application assurance for an open platform in-vehicle infotainment system 184. In some embodiments, one or more blocks of the method 400 may be performed by the system 200 described above with reference to Figure 2.

At block 401 the untrusted application 191 is instrumented to include one or more monitor modules 131. The untrusted application 191 is an element of an open platform in-vehicle infotainment system 184.

At block 402 the untrusted application 191 is ran on the open platform in-vehicle infotainment system 184. For example, a processor of the open platform in-vehicle infotainment system 184 executes the untrusted application 191 which is instrumented to include the one or more monitor modules 134.

At block 404 the measurable parameters resulting from execution of the untrusted application 191 is monitored.

At block 406 a determination is made regarding the presence of a violation of the one or more runtime rules for the untrusted application 191.

If a rule violation is not determined to be present at block 406, then the method 400 proceeds to block 407. At block 407 a determination is made regarding whether the untrusted application 191 is still running. If the untrusted application 191 is not still running at block 407, then the method 400 ends. If the untrusted application 191 is still running at block 407, then the method 400 proceeds to block 404 described above.

If a rule violation is determined to be present at block 406, then the method 400 proceeds to block 408. At block 408, a rule violation may be reported. For example, the monitor module 134 provides data to the application assurance system 199 describing the rule violation. The data includes feedback data or a trace log. Optionally, the monitor module 134 may provide feedback data or a track log to the analysis module 208 of the application assurance system 199 and the application assurance system 199 may determine whether a rule violation is present.

At block 410, a determination is made regarding whether a recovery procedure is available for the rule violation. For example, the recovery procedures data 136 may be analyzed to determine whether the recovery procedures data 136 includes a description of a recovery procedure associated with the identified rules violation. If no recovery procedure is determined to be available at block 410, then the method 400 proceeds to block 407. If a recovery procedure is determined to be available at block 410, then the method 400 proceeds to block 412.

At block 412, the recovery procedure associated with the rule violation is determined. For example, the recovery procedure includes terminating execution of the untrusted application 191 since executing the untrusted application 191 results in undesired behavior and terminating execution of the untrusted application 191 would stop the occurrence of the undesired behavior. Other recovery procedures are possible. For example, the recovery procedure may include providing a warning message to the driver via the display of the open platform in-vehicle infotainment system 184. At block 414, the recovery procedure is implemented. For example, the processor 225 terminates execution of the untrusted application 191.

### Example Open-Platform In-Vehicle Infotainment System

Figure 5 is a block diagram illustrating an example open platform in-vehicle infotainment system 184 including an application assurance system 199 and a monitor module 134. The open platform in-vehicle infotainment system 184 includes one or more of the following elements: an application assurance system 199 including a RV-Monitor application 505 (and optionally a JavaMOP application 585); an untrusted application 191 including one or more monitor modules 134; a processor 225; API data 575 describing the API for the open platform in-vehicle infotainment system 184; a communication unit 245; a display 580; and a memory 227.

These elements of the open platform in-vehicle infotainment system 184 are communicatively coupled to one another via the bus 545. The application assurance system 199 is communicatively coupled to the bus 545 via signal line 510. The untrusted application 191 is communicatively coupled to the bus 545 via signal line 515. The processor 225 is communicatively coupled to the bus 545 via signal line 520. The memory 227 is communicatively coupled to the bus 545 via signal line 525. The API data 575 is communicatively coupled to the bus 545 via signal line 530. The communication unit 245 is communicatively coupled to the bus 545 via signal line 535. In some embodiments, one or more of the elements of the open platform in-vehicle infotainment system 184 may share a signal line for communication with the bus 545.

The application assurance system 199, untrusted application 191, one or more monitor modules 134, processor 225, communication unit 245 and memory 227 were described above with reference to Figures 1-4, and so, these descriptions will not be repeated here.

The memory 227 includes one or more of the following elements: the specification data 130; the runtime rules data 132; the recovery procedures data 136; the safety rules data 138; and the monitor library 140. These elements were described above with reference to Figures 1-4, and so, these descriptions will not be repeated here.

The application assurance system 199 includes an RV-Monitor application 505. The RV-Monitor application 505 was described above with reference to Figure 1, and so, this description will not be repeated here. Embodiments of the RV-Monitor application 505 are also described in U.S. Patent No. 8,719,796 entitled "Parametric Trace Slicing" and issued on May 6, 2014, the entirety of which is hereby incorporated by reference.

Optionally, the application assurance system 199 may include a JavaMOP application 585. The JavaMOP application 585 is depicted using a hashed line in Figure 5 to indicate that it is an optional feature of the application assurance system 199. The JavaMOP application 585 includes code and routines configured to instrument the untrusted application 191 so that the untrusted application 191 includes the monitor module 134. The JavaMOP application 585 may include an instance of MOP for Java. The JavaMOP application 585 may include the JavaMOP software published by the University of Illinois. The JavaMOP application 585 may include the JavaMOP4 software developed by the University of Illinois. Examples of the JavaMOP software include JavaMOP 4.0 and any derivative or fork thereof. In some embodiments, the application assurance system 199 includes any other software quality or analysis tools configured to collect trace data from an untrusted application 191 at runtime.

In some embodiments one or more of the RV-Monitor application 505 and the JavaMOP application 585 are stored on a tangible memory such as the memory 227.

The API data 575 includes data describing the API for the open platform in-vehicle infotainment system 184. The API data 575 may optionally be stored on the memory 227 or some other tangible memory accessible by the processor 225.

The display 580 includes a graphical display of the open platform in-vehicle infotainment system 184. The display 580 is communicatively coupled to the bus 545 via a signal line 540.

The embodiments of the specification can also relate to an apparatus for performing the operations described herein. This apparatus may be specially constructed for the required purposes, or it may include a special-purpose computer selectively activated or reconfigured by a computer program stored in the computer. Such a computer program may be stored in a non-transitory computer-readable storage medium, including, but is not limited to, any type of disk including floppy disks, optical disks, CD-ROMs, and magnetic disks, read-only memories (ROMs), random access memories (RAMs), EPROMs, EEPROMs, magnetic or optical cards, flash memories including USB keys with nonvolatile memory, or any type of media suitable for storing electronic instructions, each coupled to a computer system bus.

The specification can take the form of some entirely hardware embodiments, some entirely software embodiments, or some embodiments containing both hardware and software elements. In some embodiments, the specification is implemented in software, which includes, but is not limited to, firmware, resident software, microcode, etc.

Furthermore, the description can take the form of a computer program product accessible from a computer-usable or computer-readable medium providing program code for use by or in connection with a computer or any instruction execution system. For the purposes of this description, a computer-usable or computer-readable medium can be any apparatus that can contain, store, communicate, propagate, or transport the program for use by or in connection with the instruction execution system, apparatus, or device.

A data processing system suitable for storing or executing program code will include at least one processor coupled directly or indirectly to memory elements through a system bus. The memory elements can include local memory employed during actual execution of the program code, bulk storage, and cache memories which provide temporary storage of at least some program code in order to reduce the number of times code must be retrieved from bulk storage during execution.

Input/output or I/O devices (including, but not limited to, keyboards, displays, pointing devices, etc.) can be coupled to the system either directly or through intervening I/O controllers.

Network adapters may also be coupled to the system to enable the data processing system to become coupled to other data processing systems or remote printers or storage devices through intervening private or public networks. Modems, cable modem, and Ethernet cards are just a few of the currently available types of network adapters.

Finally, the algorithms and displays presented herein are not inherently related to any particular computer or other apparatus. Various general-purpose systems may be used with programs in accordance with the teachings herein, or it may prove convenient to construct more specialized apparatus to perform the required method steps. The required structure for a variety of these systems will appear from the description below. In addition, the specification is not described with reference to any particular programming language. It will be appreciated that a variety of programming languages may be used to implement the teachings of the specification as described herein.

The foregoing description of the embodiments of the specification has been presented for the purposes of illustration and description. It is not intended to be exhaustive or to limit the specification to the precise form disclosed. Many modifications and variations are possible in light of the above teaching. It is intended that the scope of the disclosure be limited not by this detailed description, but rather by the claims of this application. Likewise, the particular naming and division of the modules, routines, features, attributes, methodologies, and other aspects are not mandatory or significant, and the mechanisms that implement the specification or its features may have different names, divisions, or formats. Furthermore, the modules, routines, features, attributes, methodologies, and other aspects of the disclosure can be implemented as software, hardware, firmware, or any combination of the three. Also, wherever a component, an example of which is a module, of the specification is implemented as software, the component can be implemented as a standalone program, as part of a larger program, as a plurality of separate programs, as a statically or dynamically linked library, as a kernel-loadable module, as a device driver, or in every and any other way known now or in the future to those that practice the art of computer programming. Additionally, the disclosure is in no way limited to embodiments in any specific programming language, or for any specific operating system or environment. Accordingly, the disclosure is intended to be illustrative, but not limiting, of the scope of the specification, which is set forth in the following claims.

The disclosure includes a system, method and tangible memory for providing application assurance for an open platform in-vehicle infotainment system. The system includes an open platform in-vehicle infotainment system including a tangible memory, a processor and an untrusted application including a monitor module. The untrusted application is stored in the tangible memory. The monitor module included in the untrusted application is generated based on a set of one or more runtime rules describing desired behavior of the untrusted application that complies with a specification for an application programming interface of the open platform in-vehicle infotainment system. The untrusted application runs on the open platform in-vehicle infotainment system. The monitor module causes the processor to observe, based on the one or more runtime rules, behavior of the untrusted application to determine whether the observed behavior of the untrusted application is consistent with the desired behavior of the untrusted application.

## Claims

1. A system of a vehicle comprising:
an open platform in-vehicle infotainment system (184) including a tangible memory (227), a processor (225) and an untrusted application (191) including a monitor module (134), wherein the untrusted application (191) is stored in the tangible memory (227) which is communicatively coupled to the processor (225);
wherein the monitor module (134) included in the untrusted application (191) is generated based on a set of one or more runtime rules describing desired behavior of the untrusted application (191) that complies with a specification for an application programming interface of the open platform in-vehicle infotainment system (184);
wherein the untrusted application (191), responsive to being executed by the processor (225), runs on the open platform in-vehicle infotainment system (184); and
wherein the monitor module (134), responsive to the untrusted application (191) being executed and running on the open platform in-vehicle infotainment system (184), causes the processor (225) to observe, based on the one or more runtime rules, behavior of the untrusted application (191) to determine whether the observed behavior of the untrusted application (191) is consistent with the desired behavior of the untrusted application (191) so that the observed behavior complies with the specification for the application programming interface of the open platform in-vehicle infotainment system (184),
**characterized in that**
the system further comprising an application assurance system (199) stored on the tangible memory (227), wherein the application assurance system (199) includes an RV-Monitor application which, responsive to being executed by the processor, causes the processor to take steps comprising:
analyzing the specification to determine desired behavior of the untrusted application (191) that complies with the specification;
retrieving geographic data describing a geographic location of the vehicle (123);
determining one or more safety guidelines based on the geographic location of the vehicle (123); and
generating the one or more runtime rules which are configured so that compliance with the one or more runtime rules corresponds to compliance with (1) the specification and (2) the one or more safety guidelines.

2. The system of claim 1, wherein the monitor module (134), responsive to being executed by the processor (225), collects feedback data describing whether the observed behavior of the untrusted application (191) is consistent with the desired behavior of the untrusted application (191).

3. The system of claim 2, wherein the monitor module (134) transmits the feedback data to the application assurance system (199) and the application assurance system (199), responsive to determining that the observed behavior of the untrusted application (191) is inconsistent with the desired behavior of the untrusted application (191), causes the processor (225) to implement a recovery procedure.

4. The system of claim 3, wherein the recovery procedure includes at least one of:
displaying a warning message for a driver via a display (580) of the open platform in-vehicle infotainment system (184), and
terminating execution of the untrusted application (191) so that the untrusted application (191) is no longer running.

5. The system of claim 3, wherein the recovery procedure includes the processor (225) searching a resource for a solution to a problem and causing the open platform in-vehicle infotainment system (184) to execute steps to implement the solution to the problem.

6. The system of claim 1, wherein, responsive to execution of the untrusted application (191), the RV-Monitor application causes the processor to execute steps comprising:
generating the monitor module (134) based on the one or more runtime rules; and
instrumenting the untrusted application (191) to include the monitor module (134).

7. The system of claim 6, wherein the geographic data describes a real time geographic location of the vehicle (123) upon execution of the untrusted application (191) so that the one or more safety guidelines are based on the real time geographic location of the vehicle (123).

8. The system of claim 1, wherein the RV-Monitor application generates, independent of source code for the untrusted application (191), the one or more runtime rules.

9. The system of claim 1, wherein the RV-Monitor application generates, independent of object code for the untrusted application (191), the one or more runtime rules.

10. A method of providing application assurance for an open platform in-vehicle infotainment system included in a vehicle, the method comprising:
executing, by a processor of the open platform in-vehicle infotainment system, an untrusted application (191) so that the untrusted application (191) runs on the open platform in-vehicle infotainment system;
analyzing a specification for an application programming interface of the open platform in-vehicle infotainment system to determine desired behavior of the untrusted application (191) that complies with the specification;
retrieving geographic data describing a geographic location of the vehicle (123);
determining one or more safety guidelines based on the geographic location of the vehicle (123);
generating the one or more runtime rules which are configured so that compliance with the one or more runtime rules corresponds to compliance with (1) the specification and (2) the one or more safety guidelines;
generating a monitor module (134) based on the one or more runtime rules; and
instrumenting the untrusted application (191) so that untrusted application (191) includes the monitor module (134), wherein the monitor module (134), responsive to the untrusted application (191) being executed and running on the open platform in-vehicle infotainment system, causes the processor (225) to observe, based on the one or more runtime rules, behavior of the untrusted application (191) to determine whether the observed behavior of the untrusted application (191) is consistent with the desired behavior of the untrusted application (191) so that the observed behavior complies with one or more runtime rules.

11. A tangible memory of open platform in-vehicle infotainment system (184) included in a vehicle (123), the tangible memory comprising computer code which, when executed by a processor (225) of the vehicle, causes the processor (225) to perform steps comprising:
executing an untrusted application (191) so that the untrusted application (191) runs on the open platform in-vehicle infotainment system (184);
analyzing a specification for an application programming interface of the open platform in-vehicle infotainment system (184) to determine desired behavior of the untrusted application (191) that complies with the specification;
retrieving geographic data describing a geographic location of the vehicle (123);
determining one or more safety guidelines based on the geographic location of the vehicle;
generating the one or more runtime rules which are configured so that compliance with the one or more runtime rules corresponds to compliance with (1) the specification and (2) the one or more safety guidelines;
generating a monitor module (134) based on the one or more runtime rules; and
instrumenting the untrusted application (191) so that untrusted application (191) includes the monitor module (134), wherein the monitor module (134), responsive to the untrusted application (191) being executed and running on the open platform in-vehicle infotainment system, causes the processor to observe, based on the one or more runtime rules, behavior of the untrusted application (191) to determine whether the observed behavior of the untrusted application (191) is consistent with the desired behavior of the untrusted application (191) so that the observed behavior complies with one or more runtime rules.

## Patentansprüche

1. System eines Fahrzeugs, mit:
einem plattformoffenen fahrzeuginternen Infotainmentsystem (184) umfassend einen greifbaren Speicher (227), einen Prozessor (225) und eine nicht vertrauenswürdige Anwendung (191) mit einem Überwachungsmodul (134), wobei die nicht vertrauenswürdige Anwendung (191) in dem greifbaren Speicher (227) gespeichert ist, der kommunikativ mit dem Prozessor (225) gekoppelt ist;
wobei das in der nicht vertrauenswürdigen Anwendung (191) enthaltene Überwachungsmodul (134) auf der Grundlage eines Satzes von einer oder mehreren Laufzeitregeln erzeugt wird, die ein gewünschtes Verhalten der nicht vertrauenswürdigen Anwendung (191) beschreiben, das eine Spezifikation für eine Anwendungsprogrammierschnittstelle des plattformoffenen fahrzeuginternen Infotainmentsystem (184) erfüllt;
wobei die nicht vertrauenswürdige Anwendung (191) als Reaktion auf deren Ausführung durch den Prozessor (225) auf dem plattformoffenen fahrzeuginternen Infotainmentsystem (184) läuft; und
wobei das Überwachungsmodul (134) als Reaktion darauf, dass die nicht vertrauenswürdige Anwendung (191) ausgeführt wird und auf dem plattformoffenen fahrzeuginternen Infotainmentsystem (184) läuft, den Prozessor (225) veranlasst, auf der Grundlage der einen oder mehreren Laufzeitregeln das Verhalten der nicht vertrauenswürdigen Anwendung (191) zu beobachten, um zu bestimmen, ob das beobachtete Verhalten der nicht vertrauenswürdigen Anwendung (191) mit dem gewünschten Verhalten der nicht vertrauenswürdigen Anwendung (191) übereinstimmt, so dass das beobachtete Verhalten die Spezifikation für die Anwendungsprogrammierschnittstelle des plattformoffenen fahrzeuginternen Infotainmentsystems (184) erfüllt,
**dadurch gekennzeichnet, dass**
das System weiterhin ein Anwendungssicherungssystem (199) aufweist, das in dem greifbaren Speicher (227) gespeichert ist, wobei das Anwendungssicherungssystem (199) eine RV-Überwachungs-Anwendung umfasst, die als Reaktion auf deren Ausführung durch den Prozessor den Prozessor veranlasst, Schritte auszuführen, die aufweisen:
Analysieren der Spezifikation, um das gewünschte Verhalten der nicht vertrauenswürdigen Anwendung (191) zu bestimmen, das die Spezifikation erfüllt;
Abrufen von geographischen Daten, die einen geographischen Standort des Fahrzeugs (123) beschreiben;
Bestimmen einer oder mehrerer Sicherheitsrichtlinien basierend auf dem geographischen Standort des Fahrzeugs (123); und
Erzeugen der einen oder mehreren Laufzeitregeln, die so konfiguriert sind, dass eine Erfüllung der einen oder mehreren Laufzeitregeln der Erfüllung (1) der Spezifikation und (2) den einen oder mehreren Sicherheitsrichtlinien entspricht.

2. System gemäß Anspruch 1, wobei das Überwachungsmodul (134) als Reaktion auf dessen Ausführung durch den Prozessor (225) Rückmeldedaten sammelt, die beschreiben, ob das beobachtete Verhalten der nicht vertrauenswürdigen Anwendung (191) mit dem gewünschten Verhalten der nicht vertrauenswürdigen Anwendung (191) übereinstimmt.

3. System gemäß Anspruch 2, wobei das Überwachungsmodul (134) die Rückmeldedaten an das Anwendungssicherungssystem (199) überträgt und das Anwendungssicherungssystem (199) als Reaktion auf eine Bestimmung, dass das beobachtete Verhalten der nicht vertrauenswürdigen Anwendung (191) nicht mit dem gewünschten Verhalten der nicht vertrauenswürdigen Anwendung (191) übereinstimmt, den Prozessor (225) veranlasst, eine Wiederherstellungsprozedur zu implementieren.

4. System gemäß Anspruch 3, wobei die Wiederherstellungsprozedur mindestens einen der folgenden Schritte umfasst:
Anzeigen einer Warnmeldung für einen Fahrer über eine Anzeige (580) des plattformoffenen fahrzeuginternen Infotainmentsystems (184), und
Beenden der Ausführung der nicht vertrauenswürdigen Anwendung (191), so dass die nicht vertrauenswürdige Anwendung (191) nicht mehr läuft.

5. System gemäß Anspruch 3, wobei die Wiederherstellungsprozedur das Durchsuchen einer Ressource durch den Prozessor (225) nach einer Lösung für ein Problem und das Veranlassen des plattformoffenen fahrzeuginternen Infotainmentsystems (184) zum Ausführen von Schritten zum Implementieren der Lösung für das Problem umfasst.

6. System gemäß Anspruch 1, wobei die RV-Überwachungs-Anwendung als Reaktion auf die Ausführung der nicht vertrauenswürdigen Anwendung (191) den Prozessor veranlasst, Schritte auszuführen, die aufweisen:
Erzeugen des Überwachungsmoduls (134) auf der Grundlage der einen oder mehreren Laufzeitregeln; und
Instrumentieren der nicht vertrauenswürdigen Anwendung (191), um das Überwachungsmodul (134) zu umfassen.

7. System gemäß Anspruch 6, wobei die geografischen Daten einen geografischen Echtzeit-Standort des Fahrzeugs (123) bei Ausführung der nicht vertrauenswürdigen Anwendung (191) beschreiben, so dass die eine oder mehreren Sicherheitsrichtlinien auf dem geografischen Echtzeit-Standort des Fahrzeugs (123) basieren.

8. System gemäß Anspruch 1, wobei die RV-Überwachungs-Anwendung unabhängig vom Quellcode für die nicht vertrauenswürdige Anwendung (191) die eine oder die mehreren Laufzeitregeln erzeugt.

9. System gemäß Anspruch 1, wobei die RV-Überwachungs-Anwendung unabhängig vom Objektcode für die nicht vertrauenswürdige Anwendung (191) die eine oder die mehreren Laufzeitregeln erzeugt.

10. Verfahren zum Bereitstellen einer Anwendungssicherheit für ein plattformoffenes fahrzeuginternes Infotainmentsystem, das in einem Fahrzeug enthalten ist, wobei das Verfahren aufweist:
Ausführen einer nicht vertrauenswürdigen Anwendung (191) durch einen Prozessor des plattformoffenen fahrzeuginternen Infotainmentsystems, so dass die nicht vertrauenswürdige Anwendung (191) auf dem plattformoffenen fahrzeuginternen Infotainmentsystem läuft;
Analysieren einer Spezifikation für eine Anwendungsprogrammierschnittstelle des plattformoffenen fahrzeuginternen Infotainmentsystems, um ein gewünschtes Verhalten der nicht vertrauenswürdigen Anwendung (191) zu bestimmen, das die Spezifikation erfüllt;
Abrufen von geographischen Daten, die einen geographischen Standort des Fahrzeugs (123) beschreiben;
Bestimmen einer oder mehrerer Sicherheitsrichtlinien basierend auf dem geographischen Standort des Fahrzeugs (123);
Erzeugen der einen oder mehreren Laufzeitregeln, die so konfiguriert sind, dass die Erfüllung der einen oder mehreren Laufzeitregeln der Erfüllung (1) der Spezifikation und (2) der einen oder mehreren Sicherheitsrichtlinien entspricht;
Erzeugen eines Überwachungsmoduls (134) basierend auf der einen oder den mehreren Laufzeitregeln; und
Instrumentieren der nicht vertrauenswürdigen Anwendung (191), so dass die nicht vertrauenswürdige Anwendung (191) das Überwachungsmodul (134) umfasst, wobei das Überwachungsmodul (134) als Reaktion darauf, dass die nicht vertrauenswürdige Anwendung (191) ausgeführt wird und auf dem plattformoffenen fahrzeuginternen Infotainmentsystem läuft, den Prozessor (225) veranlasst, auf der Grundlage der einen oder mehreren Laufzeitregeln das Verhalten der nicht vertrauenswürdigen Anwendung (191) zu beobachten, um zu bestimmen, ob das beobachtete Verhalten der nicht vertrauenswürdigen Anwendung (191) mit dem gewünschten Verhalten der nicht vertrauenswürdigen Anwendung (191) übereinstimmt, so dass das beobachtete Verhalten mit einer oder mehreren Laufzeitregeln übereinstimmt.

11. Greifbarer Speicher eines plattformoffenen fahrzeuginternen Infotainmentsystems (184), das in einem Fahrzeug (123) enthalten ist, wobei der greifbare Speicher einen Computercode aufweist, der, wenn dieser von einem Prozessor (225) des Fahrzeugs ausgeführt wird, den Prozessor (225) veranlasst, Schritte durchzuführen, die aufweisen:
Ausführen einer nicht vertrauenswürdigen Anwendung (191), so dass die nicht vertrauenswürdige Anwendung (191) auf dem plattformoffenen fahrzeuginternen Infotainmentsystem (184) läuft;
Analysieren einer Spezifikation für eine Anwendungsprogrammierschnittstelle des plattformoffenen fahrzeuginternen Infotainmentsystems (184), um ein gewünschtes Verhalten der nicht vertrauenswürdigen Anwendung (191) zu bestimmen, das die Spezifikation erfüllt;
Abrufen von geographischen Daten, die einen geographischen Standort des Fahrzeugs (123) beschreiben;
Bestimmen einer oder mehrerer Sicherheitsrichtlinien basierend auf dem geographischen Standort des Fahrzeugs;
Erzeugen der einen oder mehreren Laufzeitregeln, die so konfiguriert sind, dass die Erfüllung der einen oder mehreren Laufzeitregeln der Erfüllung (1) der Spezifikation und (2) der einen oder mehreren Sicherheitsrichtlinien entspricht;
Erzeugen eines Überwachungsmoduls (134) basierend auf der einen oder den mehreren Laufzeitregeln; und
Instrumentieren der nicht vertrauenswürdigen Anwendung (191), so dass die nicht vertrauenswürdige Anwendung (191) das Überwachungsmodul (134) umfasst, wobei das Überwachungsmodul (134) als Reaktion darauf, dass die nicht vertrauenswürdige Anwendung (191) ausgeführt wird und auf dem plattformoffenen fahrzeuginternen Infotainmentsystem läuft, den Prozessor veranlasst, auf der Grundlage der einen oder mehreren Laufzeitregeln das Verhalten der nicht vertrauenswürdigen Anwendung (191) zu beobachten, um zu bestimmen, ob das beobachtete Verhalten der nicht vertrauenswürdigen Anwendung (191) mit dem gewünschten Verhalten der nicht vertrauenswürdigen Anwendung (191) übereinstimmt, so dass das beobachtete Verhalten mit einer oder mehreren Laufzeitregeln übereinstimmt.

## Revendications

1. Système de véhicule, comprenant :
un système embarqué d'infodivertissement à plate-forme ouverte (184) comprenant une mémoire tangible (227), un processeur (225) et une application non fiable (191) incluant un module de surveillance (134), dans lequel l'application non sécurisée (191) est stockée dans la mémoire tangible (227) qui est couplée en communication au processeur (225) ;
dans lequel le module de surveillance (134) inclus dans l'application non fiable (191) est généré sur la base d'un ensemble d'une ou de plusieurs règle(s) d'exécution décrivant un comportement souhaité de l'application non fiable (191), qui est conforme à une spécification d'une interface de programmation d'application du système embarqué d'infodivertissement à plate-forme ouverte (184) ;
dans lequel l'application non fiable (191), en réponse à son exécution par le processeur (225), s'exécute sur le système embarqué d'infodivertissement à plate-forme ouverte (184) ; et
dans lequel le module de surveillance (134), en réponse à l'exécution de l'application non fiable (191) s'exécutant sur le système embarqué d'infodivertissement à plate-forme ouverte (184), fait en sorte que le processeur (225) observe, sur la base de la règle ou des règle (s) d'exécution, un comportement de l'application non fiable (191) pour déterminer si le comportement observé de l'application non fiable (191) est cohérent avec le comportement souhaité de l'application non fiable (191), de manière que le comportement observé soit conforme à la spécification de l'interface de programmation d'application du système embarqué d'infodivertissement à plate-forme ouverte (184),
**caractérisé en ce que** :
le système comprend en outre un système d'assurance d'application (199) stocké dans la mémoire tangible (227), dans lequel le système d'assurance d'application (199) comprend une application RV-Monitor qui, en réponse à son exécution par le processeur, fait prendre au processeur des mesures comprenant :
analyser la spécification pour déterminer un comportement souhaité de l'application non fiable (191), qui est conforme à la spécification ;
récupérer des données géographiques décrivant un emplacement géographique du véhicule (123) ;
déterminer une ou plusieurs directive(s) de sécurité sur la base de l'emplacement géographique du véhicule (123) ; et
générer la ou les règle (s) d'exécution qui est ou sont configurée (s) de manière que la conformité à la règle ou aux règles d'exécution corresponde à la conformité (1) à la spécification et (2) à la directive ou aux directives de sécurité.

2. Système selon la revendication 1, dans lequel le module de surveillance (134), en réponse à son exécution par le processeur (225), collecte des données de rétroaction décrivant si le comportement observé de l'application non fiable (191) est cohérent avec le comportement souhaité de l'application non fiable (191).

3. Système selon la revendication 2, dans lequel le module de surveillance (134) transmet les données de rétroaction au système d'assurance d'application (199) et le système d'assurance d'application (199), en réponse à la détermination de ce que le comportement observé de l'application non fiable (191) n'est pas cohérent avec le comportement souhaité de l'application non fiable (191), fait mettre en œuvre au processeur (225) une procédure de redressement.

4. Système selon la revendication 3, dans lequel la procédure de redressement comprend les étapes suivantes :
afficher un message d'avertissement à l'intention d'un conducteur, au moyen d'un dispositif d'affichage (580) du système embarqué d'infodivertissement à plate-forme ouverte (184), et/ou
mettre fin à l'exécution de l'application non fiable (191) de manière que l'application non fiable (191) ne soit plus en cours d'exécution.

5. Système selon la revendication 3, dans lequel la procédure de redressement comprend le fait que le processeur (225) recherche dans une ressource une solution à un problème et qu'il fasse exécuter au système embarqué d'infodivertissement à plate-forme ouverte (184) des étapes pour mettre en œuvre la solution au problème.

6. Système selon la revendication 1, dans lequel, en réponse à l'exécution de l'application non fiable (191), l'application RV-Monitor fait exécuter au processeur des étapes comprenant :
générer le module de surveillance (134) sur la base de la règle ou des règles d'exécution ; et
instrumenter l'application non fiable (191) pour inclure le module de surveillance (134).

7. Système selon la revendication 6, dans lequel les données géographiques décrivent un emplacement géographique en temps du véhicule (123) lors de l'exécution de l'application non fiable (191), de manière que la ou les directive (s) de sécurité soi(en)t fondée(s) sur l'emplacement géographique en temps réel du véhicule (123).

8. Système selon la revendication 1, dans lequel l'application RV-Monitor génère, indépendamment d'un code source de l'application non fiable (191), la ou les règle(s) d'exécution.

9. Système selon la revendication 1, dans lequel l'application RV-Monitor génère, indépendamment d'un code objet de l'application non fiable (191), la ou les règle (s) d'exécution.

10. Procédé de fourniture d'une assurance d'application pour un système embarqué d'infodivertissement à plate-forme ouverte inclus dans un véhicule, le procédé comprenant les étapes suivantes :
exécuter, au moyen d'un processeur du système embarqué d'infodivertissement à plate-forme ouverte, une application non fiable (191), de manière que l'application non fiable (191) s'exécute sur le système embarqué d'infodivertissement à plate-forme ouverte ;
analyser une spécification d'une interface de programmation d'application du système embarqué d'infodivertissement à plate-forme ouverte pour déterminer un comportement souhaité de l'application non fiable (191), qui est conforme à la spécification ;
récupérer des données géographiques décrivant un emplacement géographique du véhicule (123) ;
déterminer une ou plusieurs directive(s) de sécurité sur la base de l'emplacement géographique du véhicule (123) ;
générer la ou les règle (s) d'exécution qui est ou sont configurée (s) de manière que la conformité à la règle ou aux règles d'exécution corresponde à la conformité (1) à la spécification et (2) à la directive ou aux directives de sécurité ;
générer un module de surveillance (134) sur la base de la règle ou des règles d'exécution ; et
instrumenter l'application non fiable (191) de manière que l'application non fiable (191) inclue le module de surveillance (134), dans lequel le module de surveillance (134), en réponse à l'exécution de l'application non fiable (191) s'exécutant sur le système embarqué d'infodivertissement à plate-forme ouverte, fait en sorte que le processeur (225) observe, sur la base de la règle ou des règle(s) d'exécution, un comportement de l'application non fiable (191) pour déterminer si le comportement observé de l'application non fiable (191) est cohérent avec le comportement souhaité de l'application non fiable (191), de manière que le comportement observé soit conforme à une ou plusieurs règle(s) d'exécution.

11. Mémoire tangible d'un système embarqué d'infodivertissement à plate-forme ouverte (184) inclus dans un véhicule (123), la mémoire tangible comprenant un code informatique qui, lorsqu'il est exécuté par un processeur (225) du véhicule, fait effectuer au processeur (225) des étapes comprenant :
exécuter une application non fiable (191), de manière que l'application non fiable (191) s'exécute sur le système embarqué d'infodivertissement à plate-forme ouverte (184) ;
analyser une spécification d'une interface de programmation d'application du système embarqué d'infodivertissement à plate-forme ouverte (184) pour déterminer un comportement souhaité de l'application non fiable (191), qui est conforme à la spécification ;
récupérer des données géographiques décrivant un emplacement géographique du véhicule (123) ;
déterminer une ou plusieurs directive(s) de sécurité sur la base de l'emplacement géographique du véhicule ;
générer la ou les règle (s) d'exécution qui est ou sont configurée (s) de manière que la conformité à la règle ou aux règles d'exécution corresponde à la conformité (1) à la spécification et (2) à la directive ou aux directives de sécurité ;
générer un module de surveillance (134) sur la base de la règle ou des règles d'exécution ; et
instrumenter l'application non fiable (191) de manière que l'application non fiable (191) inclue le module de surveillance (134), dans lequel le module de surveillance (134), en réponse à l'exécution de l'application non fiable (191) s'exécutant sur le système embarqué d'infodivertissement à plate-forme ouverte, fait en sorte que le processeur observe, sur la base de la règle ou des règle(s) d'exécution, un comportement de l'application non fiable (191) pour déterminer si le comportement observé de l'application non fiable (191) est cohérent avec le comportement souhaité de l'application non fiable (191), de manière que le comportement observé soit conforme à une ou plusieurs règle(s) d'exécution.
